# EUROPÄISCHE PATENTSCHRIFT

(11) **EP 0 844 131 B1**
(45) Veröffentlichungstag und Bekanntmachung des Hinweises auf die Patenterteilung: **17.12.2003**
(21) Anmeldenummer: 97120423.5
(22) Anmeldetag: 21.11.1997
(51) Int. Cl.: B60L 5/22

(54) **Wippe für Stromabnehmer elektrisch angetriebener Fahrzeuge mit Oberleitungsversorgung**
Pantograph for a current collector of electrically propelled vehicles with overhead power supply
Pantographe pour prise de courant de véhicules à propulsion électrique avec alimentation par ligne aérienne

(30) Priorität: 25.11.1996 DE 19648787
(43) Veröffentlichungstag der Anmeldung: 27.05.1998
(73) Patentinhaber: Stemmann-Technik GmbH, 48459 Schüttorf (DE)
(72) Erfinder:
(74) Vertreter: Bockermann, Rolf, Dipl.-Ing.

(56) Entgegenhaltungen:
- EP-A- 0 444 973
- WO-A-91/13781
- DE-A- 4 201 788

## Beschreibung

Die Erfindung betrifft eine Wippe für Stromabnehmer elektrisch angetriebener Fahrzeuge mit Oberleitungsversorgung, wobei die Wippe als Rahmenwippe mit zwei parallel zueinander quer zur Fahrzeuglängsachse verlaufenden, untereinander durch zwei parallel zueinander in Fahrzeuglängsrichtung verlaufende Tragelemente verbundenen Schleifstücken ausgeführt ist, wobei die Wippe eine Scheitelwelle zur Verbindung mit dem Oberarm oder der Oberschere des Stromabnehmers aufweist und wobei zwischen der Scheitelwelle und den Tragelementen federnde Verbindungselemente vorgesehen sind.

Für einen störungsfreien und verschleißarmen Betrieb von Stromabnehmern elektrisch angetriebener Fahrzeuge ist es wichtig, dass der Kontaktdruck zwischen dem Fahrdraht der Oberleitung und den Schleifleisten des Stromabnehmers innerhalb eines vorgegebenen Kontaktdruck-Bereiches bleibt. Bei fahrendem Fahrzeug treten infolge von statischen und dynamischen Höhenänderungen der Oberleitung sowie infolge von vertikalen Bewegungen des Fahrzeugs selbst und des darauf aufgebauten Stromabnehmers Kontaktdruck-Änderungen auf, die erhebliche Größen erreichen können. Da allgemein bekannt ist, dass kleine zu beschleunigende Massen die Federungseigenschaften verbessern, ist man bestrebt, Wippen für Stromabnehmer mit möglichst geringer Masse zu bauen.

Ein weiteres betriebliches Problem, das insbesondere in Oberleitungsnetzen von Straßenbahnen und S-Bahnen auftritt, sind Störstellen im Verlauf des Fahrdrahtes, z.B. defekte Streckentrenner oder beschädigte Fahrdrahtaufhängungen. Beim Passieren einer solchen Störstelle durch die Wippe kommt es häufig zu Beschädigungen an den Schleifleisten, am gesamten Stromabnehmer oder sogar am Oberleitungssystem. Eine Vermeidung oder wenigstens Verminderung derartiger Schäden kann dadurch erreicht werden, dass der Wippe des Stromabnehmers ein zusätzlicher Freiheitsgrad, insbesondere in Längsrichtung des Fahrzeugs, gegeben wird.

Eine Wippe für einen Stromabnehmer, die die vorstehend aufgeführten Anforderungen erfüllt, ist schon aus der DE 42 19 112 A1 bekannt. Bei dieser bekannten Wippe sind die Schleifleisten an den Enden eines Druckstabes befestigt und dieser Druckstab wird mit zwei elastischen Zugmitteln am Tragorgan gehalten, wobei die Zugmittel bevorzugt in Richtung auftretender Windkräfte angeordnet sind. Die Zugmittel können dabei beispielsweise Schraubenfedern oder gewellte Flachfedem oder elastische Druckstäbe oder starre Stäbe mit elastischen Lagerungen sein. Die Wippe besitzt hier neben ihrer Beweglichkeit in Vertikalrichtung und in Längsrichtung des Fahrzeuges auch Bewegungsfreiheit horizontal quer zur Längsrichtung des Fahrzeugs. Gerade diese Querbeweglichkeit ist aber in vielen Einsatzfällen von Stromabnehmern eher unerwünscht, da sie im Extremfall zu einem seitlichen Ablaufen der Wippe vom Fahrdraht der Oberleitung führen kann, insbesondere dann, wenn, wie bei dieser bekannten Wippe, die Federsteifigkeit horizontal in Querrichtung des Fahrzeugs konstruktionsbedingt nicht besonders hoch ist.

Eine weitere Wippe für einen Stromabnehmer ist aus der DE 31 38 264 C2 bekannt. Diese bekannte Wippe weist zwei in Fahrtrichtung hintereinander angeordnete Schleifstückträger für Schleifstücke auf, wobei die Schleifstückträger über Sätze von übereinander liegenden, parallel verlaufenden Federn an einem mit dem Stromabnehmer verbundenen Scheitelrohr befestigt sind und die Fedem am Scheitelrohr fest eingespannt sind. Weiterhin sind die Federn zwischen dem Scheitelrohr und den Schleifstückträgem zumindest von unten abgestützt. Ergänzend können wenigstens ein Teil der Federn stabförmige Federn sein, wobei bevorzugt die stabförmigen Federn einen kreisrunden, quadratischen oder rechteckigen Querschnitt aufweisen. Da alle Federn in Längsrichtung des Fahrzeugs verlaufen, besitzt die Wippe in Fahrzeuglängsrichtung keinen Federungs-Freiheitsgrad, was die oben erläuterten betrieblichen Probleme besonders in Erscheinung treten lässt. Ein weiterer Nachteil dieser bekannten Wippe wird darin gesehen, dass zur Erzielung der erforderlichen Längen der Federn die Schfeifstückträger und damit die Schleifstücke selbst einen relativ großen Abstand voneinander aufweisen müssen, was für manche Anwendungen, insbesondere bei Wippen für Straßenbahn-Stromabnehmer, unerwünscht ist. Als wesentlich wird bei dieser bekannten Wippe herausgestellt, dass jeder Schleifstückträger unabhängig vom anderen aufgehängt ist. Bei sehr exakt verlegten Fahrleitungen mit geringen Höhenschwankungen ist eine solche Aufhängung sicherlich vorteilhaft; allerdings verkehrt sich bei Fahrleitungsnetzen mit ungenauer oder stark schwankender Höhenlage der Fahrleitung diese Eigenschaft in einen Nachteil. Dies beruht darauf, dass bei einem Steigen oder Fallen der Fahrleitung relativ zum Fahrzeug die Flächen der beiden Schleifstücke, die an der Fahrleitung anliegen, nicht mehr in einer Ebene liegen. Die Schleifstücke verkanten also relativ zur Fahrleitung, was den Schleifstückverschleiß beschleunigt und die Kontaktsicherheit beeinträchtigt. Schließlich ist noch festzustellen, dass die bekannte Wippe in Querrichtung zur Fahrleitung nur dann eine ausreichende Stabilität und Steifigkeit aufweist, wenn die Federn im Querschnitt rechteckig, d.h. in Form von Blattfedem ausgeführt sind. Solche Blattfedern sind aber andererseits aerodynamisch eher ungünstig, weil sie in Abhängigkeit von der Fahrzeuggeschwindigkeit zu starken Änderungen des Anpressdrucks der Schleifstücke an die Fahrleitung führen.

Aus der WO 91/13 781 ist eine Wippe für einen Stromabnehmer bekannt, bei welcher zwei Schleifstücke durch in parallelogrammförmiger Ausrichtung übereinander liegende, V-förmig konfigurierte Federbügelpaare mit einem zentralen Querträger verbunden sind. Jeder Federbügel ist über Gelenke an die Schleifstücke und an den Querträger angeschlossen. Der von den Oberscherenarmen des Stromabnehmers gelenkig getragene Querträger ist außerdem unterhalb der unteren Federbügel über Längsstreben mit integrierten Federelementen mit den Schleifstücken gekoppelt.

Es stellt sich deshalb für die vorliegende Erfindung die Aufgabe, eine Wippe der eingangs genannten Art zu schaffen, die bei geringer zu federnder Masse und unter Beibehaltung der damit erzielten Vorteile aus möglichst wenigen Bauteilen besteht und einfach herstellbar ist, die die erwünschten Freiheitsgrade mit passenden Federungscharakteristiken aufweist und die unerwünschte Freiheitsgrade vermeidet.

Die Lösung dieser Aufgabe gelingt erfindungsgemäß durch eine Wippe der eingangs genannten Art, die dadurch gekennzeichnet ist,
- dass die federnden Verbindungselemente durch zwei aus einem stabförmigen Material bestehende, U-förmig verlaufende Federbügel gebildet sind,
- dass die U-Schenkel jedes Federbügels quer zur Fahrzeuglängsrichtung verlaufen und der U-Bogen jedes Federbügels in Fahrzeuglängsrichtung weist,
- dass die Federbügel jeweils mit ihren freien U-Schenkel-Enden mit einem starr an der Scheitelwelle angebrachten Haltebalken und jeweils im Bereich ihres U-Bogens mit einem der Tragelemente verbunden sind,
- dass die Verbindung zwischen den freien U-Schenkel-Enden des Federbügels und dem Haltebalken jeweils eine lösbare und in U-Schenkel-Längsrichtung verstellbare Klemmverbindung ist und
- dass die Verbindung zwischen dem U-Bogen-Bereich des Federbügels und dem Tragelement jeweils eine klemmfreie Steckverbindung ist.

Durch die erfindungsgemäße Ausführung und Anordnung der federnden Verbindungselemente wird vorteilhaft erreicht, dass die Wippe relativ zu den übrigen Teilen des Stromabnehmers Bewegungsfreiheit in Vertikalrichtung, d.h. in Richtung des Kontaktdrucks, in Fahrzeuglängsrichtung und in Pendelrichtung um die Scheitelwelle erhält, wobei gleichzeitig ein unerwünschter Freiheitsgrad horizontal quer zur Fahrzeuglängsrichtung vermieden wird. Gleichzeitig erhält jeder Bewegungs-Freiheitsgrad ohne besonders Maßnahmen allein durch die Ausführung der Verbindungselemente als U-förmige Federbügel die gewünschte Federungscharakteristik, nämlich eine relativ weiche Federung in Vertikalrichtung und relativ dazu eine härtere Federung in Fahrzeuglängsrichtung sowie in Pendelrichtung um die Scheitelwelle. Gleichzeitig benötigt die Wippe nur sehr wenige Bauteile, so dass alle Vorteile einer geringen Masse erhalten bleiben. Zudem sind die Federungseigenschaften der Federbügel problemlos berechenbar und somit konstruktiv optimal für jeden Anwendungsfall auslegbar.

Weiterhin ist vorgesehen, dass die Federbügel jeweils mit ihren freien U-Schenkel-Enden mit dem Haltebalken und jeweils im Bereich ihres U-Bogens mit dem Tragelement verbunden sind. Diese Ausrichtung der Federbügel bietet insbesondere den Vorteil, dass das Zusammenbauen der Wippe sehr einfach ist, weil das Einbauen der Federbügel ohne Behinderung durch andere Wippenteile von den Außenseiten her erfolgen kann. Ein weiterer Vorteil ist, dass im Bereich der Tragelemente, die im Betrieb des zugehörigen Fahrzeuges relativ nah an der Oberleitung liegen, keine vorstehenden U-Schenkel-Enden auftreten können, die eventuell, z.B. bei unsachgemäßem Zusammenbau, in unerwünschten Kontakt mit dem Fahrdraht kommen könnten.

Ferner sieht die Erfindung vor, dass die Verbindung zwischen den freien U-Schenkel-Enden des Federbügels und dem Haltebalken jeweils eine lösbare und in U-Schenkel-Längsrichtung verstellbare Klemmverbindung ist. Diese Verbindung ist einerseits sehr schnell herstellbar und lösbar und bietet andererseits den großen Vorteil, dass durch die Verstellbarkeit die Länge der U-Schenkel bis zum U-Bogen verändert werden kann, wodurch eine entsprechende Änderung der Federungseigenschaften erreichbar ist.

Hinsichtlich der Verbindung zwischen dem U-Bogen-Bereich des Federbügels und dem Tragelement ist vorgesehen, dass diese jeweils eine klemmfreie Steckverbindung ist. Eine solche Steckverbindung ist äußerst einfach herstellbar, was die Montage der Wippe erleichtert und Zusammenbaufehler vermindert.

Zur Ermöglichung der zuvor erwähnten Steckverbindung ist bevorzugt vorgesehen, dass in jedem Tragelement zwei Bohrungen im Abstand der U-Schenkel des Federbügels angebracht sind und dass der Federbügel mit seinem U-Schenkel bis zum Anschlag des U-Bogens außen am Tragelement durch dieses durchgesteckt ist. Die Herstellung derartiger Bohrungen ist ein einfacher Bearbeitungsvorgang, was mit zu niedrigeren Herstellungskosten der Wippe beiträgt. Außerdem sorgt der Anschlag des U-Bogens außen am Tragelement dafür, dass unerwünschte Querbewegungen der Wippe relativ zu den übrigen Teilen des Stromabnehmers weitestgehend unterbunden werden. Wenn doch eine gewisse Querbeweglichkeit erwünscht ist, kann der U-Bogen-Bereich des Federbügels zusätzlich mit einer zum Tragelement weisenden gegenläufigen Biegung oder Ausrundung versehen sein, wodurch dann eine gewisse Querbeweglichkeit, verbunden mit einer erwünschten harten Federungscharakteristik, erreicht wird.

Eine weitere Ausgestaltung der Wippe sieht vor, dass die Haltebalken in Axialrichtung der Scheitelwelle auf dieser verschiebbar und in gewünschten Positionen arretierbar sind. Diese Verschiebbarkeit der Haltebalken auf der Scheitelwelle bietet die Möglichkeit, unter Verwendung einheitlicher Haltebalken und Federbügel unterschiedlich breite Wippen zu bauen. Auch die Tragelemente können weiter verwendet werden; lediglich die Schleifleisten erhalten dann unterschiedliche Längen, wodurch unterschiedliche Breiten der Wippe realisiert werden.

Um eine Überlastung und damit Beschädigung der Federbügel im Betrieb der Wippe auszuschließen, wird vorgeschlagen, dass die Scheitelwelle eine solche Länge aufweist, dass ihre Enden unterhalb der Tragelemente liegen und dass bei rein statischer Belastung der an die Oberleitung angelegten Wippe die Tragelemente Abstand von der Scheitelwelle aufweisen. Durch diese Konstruktion wird erreicht, dass die Scheitelwelle bei übermäßiger Belastung der Wippe durch Kräfte von oben maximal bis an die Scheitelwelle einfedert, die somit einen Anschlag für die Federung in Vertikalrichtung bildet. Die Scheitelwelle selbst kann dabei ebenfalls eine vorgebbare Biegesteifigkeit und damit eine vorgebbare Federungscharakteristik aufweisen, so dass bei Erreichen des Anschlages zur Federwirkung der Federbügel noch die - wesentlich härtere - Federungswirkung der Scheitelwelle hinzukommt. Um nicht nur eine Begrenzung des Federweges in Vertikalrichtung nach unten zu ermöglichen, sondern auch hinsichtlich der anderen möglichen Relativbewegungen zwischen der Wippe und den übrigen Teilen des Stromabnehmers eine Bewegungsbegrenzung zu gewährleisten, wird vorgeschlagen, dass an den Tragelementen und/oder an den Enden der Scheitelwelle Anschläge zur Begrenzung der Relativbewegungen zueinander vorgesehen sind. Eine mögliche Ausführung solcher Anschläge besteht darin, dass unterseitig an jedem Tragelement ein rahmenförmiger Fortsatz vorgesehen ist, der eine Durchbrechung aufweist, in die die Enden der Scheitelwelle mit Bewegungsspiel hineinragen. Durch den Abstand zwischen Scheitelwelle und Durchbrechung des rahmenförmigen Fortsatzes wird das Bewegungsspiel der Wippe in der betreffenden Richtung festgelegt.

Um bei Erreichen des Anschlags keine harten Aufstöße zu bekommen, können die Unterseite der Tragelemente und/oder die Enden der Scheitelwelle und/oder die Anschläge mit aufpralldämptendem Material belegt sein. Dieses Material kann beispielsweise Gummi oder Kunststoff, vorzugsweise in geschlossenzelliger Ausführung, sein.

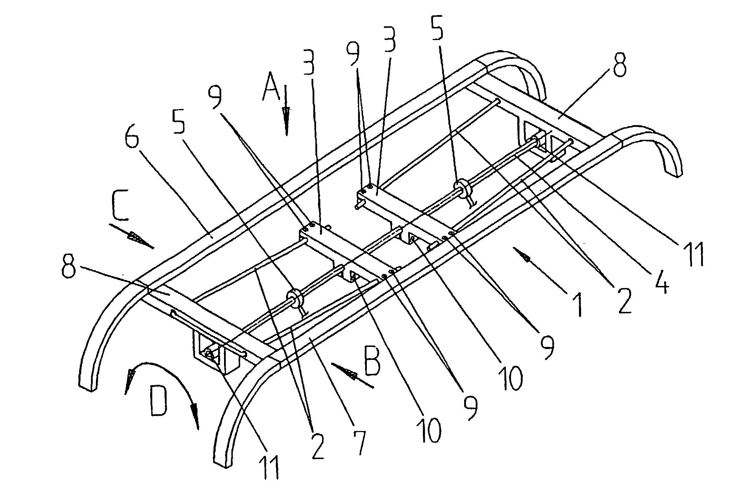

Ein Ausführungsbeispiel der erfindungsgemäßen Wippe wird im folgenden anhand einer Zeichnung erläutert. Die einzige Figur der Zeichnung zeigt eine Wippe in Ansicht schräg von oben.

Die Zeichnungsfigur zeigt eine Rahmenwippe 1, die mittels zweier U-förmiger Federbügel 2 und zweier Haltebalken 3 an einer Scheitelwelle 4 eines im übrigen nicht dargestellten Stromabnehmers befestigt ist. Die Scheitelwelle 4 ist in Lagern 5 des Oberarms des Stromabnehmers drehbar gelagert, wobei der Oberarm nur ansatzweise dargestellt ist.

Zwei Schleifleisten 6 und 7 sind mit den Tragelementen 8 fest verschraubt und bilden mit ihnen zusammen einen starren Rahmen. Die Tragelemente 8 sind bevorzugt aus einem Kunststoff oder aus einem Leichtmetall, z.B. Aluminium, hergestellt und durch ihre Bauart so gestaltet, dass sie möglichst leicht sind.

Die Federbügel 2 sind jeweils durch zwei Bohrungen in den Tragelementen 8 von außen her durch diese hindurchgeführt und ihren freien Enden mittels Klemmschrauben 9 in den Haltebalken 3 unverdrehbar befestigt. Die Bohrungen in den Haltebalken 3 sind leicht schräg zur Horizontalen ausgeführt, wodurch die Federbügel 2 nach außen hin leicht ansteigen und so eine Vorspannung erhalten.

Bei Krafteinwirkungen oder Stößen aus der Richtung A, bedingt durch den Kontaktdruck der Oberleitung gegen die Wippe 1, verhalten sich die Federbügel 2 wie Biegefedem mit einer einseitigen Einspannung, also relativ weich. Bei Kräften oder Stößen, bedingt durch z.B. Störstellen, in der Oberleitung, aus den Richtungen B und C, die der Längsrichtung eines mit dem Stromabnehmer ausgestatteten Fahrzeuges entsprechen, verhalten sich die Federbügel 2 ähnlich Biegefedem mit beidseitiger fester Einspannung, also deutlich härter.

Bei Pendelbewegungen um die Scheitelwelle 4 in Richtung D sind die Federbügel 2 einer kombinierten Torsions- und Biegebelastung ausgesetzt und dann ebenfalls relativ hart.

Die Bewegungen der Wippe 1 relativ zu den übrigen Teilen des Stromabnehmers in den Richtungen A, B und C sind dadurch begrenzt, dass die Tragelemente 8 unterseitig einen rahmenartigen Fortsatz mit einer Durchbrechung haben, durch die das jeweilige Ende der Scheitelwelle 4 hindurchgeführt ist. Bei rein statischer Belastung der Wippe 1 haben die Enden der Scheitelwelle 4 allseitig Abstand zum Tragelement 8; bei starker dynamischer Belastung der Wippe 1 wirken die Ränder der Durchbrechungen als Anschläge, die übermäßige Belastungen der Federbügel 2 verhindem. Zur Vermeidung zu harter Anschläge der Wippe 1 sind die Enden der Scheitelwelle 4 mit je einem Ring 11, bestehend aus einem weichen, aufpralfdämpfendem Material, z.B. Gummi, eingefasst.

Durch Lösen der Klemmschrauben 9 und 10 und Verschieben der Haltebalken 3 auf der Scheitelwelle 4 nach innen oder außen lässt sich die Federkonstante der Federbügel 2 in gewünschter Weise verändern. Durch Lösen allein der Klemmschrauben 10 und Verschieben der Haltebalken 3 lässt sich der Abstand der Federbügel 2 an unterschiedliche Längen der Schleifstücke 6, 7 und somit an unterschiedliche Wippenbreiten anpassen.

## Patentansprüche

1. Wippe (1) für Stromabnehmer elektrisch angetriebener Fahrzeuge mit Oberleitungsversorgung, wobei die Wippe (1) als Rahmenwippe mit zwei parallel zueinander quer zur Fahrzeuglängsachse verlaufenden, untereinander durch zwei parallel zueinander in Fahrzeuglängsrichtung verlaufende Tragelemente (8) verbundenen Schleifstücken (6, 7) ausgeführt ist, wobei die Wippe (1) eine Scheitelwelle (4) zur Verbindung mit einem Oberarm oder einer Oberschere des Stromabnehmers aufweist und wobei zwischen der Scheitelwelle (4) und den Tragelementen (8) federnde Verbindungselemente vorgesehen sind,
**dadurch gekennzeichnet,**
- **dass** die federnden Verbindungselemente durch zwei aus einem stabförmigen Material bestehende, U-förmig verlaufende Federbügel (2) gebildet sind,
- **dass** die U-Schenkel jedes Federbügels (2) quer zur Fahrzeuglängsrichtung verlaufen und der U-Bogen jedes Federbügels (2) in Fahrzeuglängsrichtung weist,
- **dass** die Federbügel (2) jeweils mit ihren freien U-Schenkel-Enden mit einem starr an der Scheitelwelle (4) angebrachten Haltebalken (3) und jeweils im Bereich ihres U-Bogens mit einem der Tragelemente (8) verbunden sind,
- **dass** die Verbindung zwischen den freien U-Schenkel-Enden des Federbügels (2) und dem Haltebalken (3) jeweils eine lösbare und in U-Schenkel-Längsrichtung verstellbare Klemmverbindung ist und
- **dass** die Verbindung zwischen dem U-Bogen-Bereich des Federbügels (2) und dem Tragelement (8) jeweils eine klemmfreie Steckverbindung ist.

2. Wippe nach Anspruch 1, **dadurch gekennzeichnet, dass** in jedem Tragelement (8) zwei Bohrungen im Abstand der U-Schenkel des Federbügefs (2) angebracht sind und dass der Federbügel (2) mit seinen U-Schenkeln bis zum Anschlag des U-Bogens außen am Tragelement (8) durch dieses durchgesteckt ist.

3. Wippe nach einem der vorangehenden Ansprüche, **dadurch gekennzeichnet, dass** die Haltebalken (3) in Axialrichtung der Scheitelwelle (4) auf dieser verschiebbar und in gewünschten Positionen arretierbar sind.

4. Wippe nach einem der vorangehenden Ansprüche, **dadurch gekennzeichnet, dass** die Scheitelwelle (4) eine solche Länge aufweist, dass ihre Enden unterhalb der Tragelemente (8) liegen und dass bei rein statischer Belastung der an die Oberleitung angelegten Wippe (1) die Tragelemente (8) Abstand von der Scheitelwelle (4) aufweisen.

5. Wippe nach Anspruch 4, **dadurch gekennzeichnet, dass** an den Tragelementen (8) und/oder an den Enden der Scheitelwelle (4) Anschläge zur Begrenzung der Relativbewegungen zueinander vorgesehen sind.

6. Wippe nach Anspruch 4 oder 5, **dadurch gekennzeichnet, dass** die Unterseite der Tragelemente (8) und/oder die Enden der Scheitelwelle (4) und/oder die Anschläge mit aufpralldämpfendem Material (11) belegt sind.

## Claims

1. A bow (1) for current collectors for electrically driven vehicles having an overhead power supply, the bow (1) being constructed in the form of a frame bow having two sliding portions (6,7) which extend parallel to one another transversely to the vehicle longitudinal axis and interconnected by two carrier elements (8) extending parallel to one another in the longitudinal direction of the vehicle, the bow (1) having an apical shaft (4) for connection to a top arm or a top collector pantograph element and resilient connection elements being provided between the apical shaft (4) and the carrier elements (8),
**characterised in that**
the resilient connection elements are formed by two spring yokes (2) consisting of rod-shaped material and extending in the form of an U,
**in that** the U-limbs of each spring yoke (2) extend transversely to the vehicle longitudinal direction and the U-arch of each spring yoke (2) points in the longitudinal direction of the vehicle,
**in that** the spring yokes (2) are each connected, by their free U-limb ends, to a retaining bar (3) rigidly mounted on the apical shaft (4) and, in the region of their U-arch, are each connected to one of the carrier elements (8),
**in that** the connection between the free U-limb ends of the spring yoke (2) and the retaining bar (3) is in each case a releasable clamping connection adjustable in the U-limb longitudinal direction and
**in that** the connection between the U-arch zone of the spring yoke (2) and the carrier element (8) is in each case a clamping-free push-fit connection.

2. A bow according to claim 1, **characterised in that** each carrier element (8) is formed with two boreholes spaced to correspond to the spacing of the U-limbs of the spring yoke (2) and **in that** the spring yoke (2) is pushed by its U-limbs through the carrier element (8) until the U-arch externally abuts the carrier element (8).

3. A bow according to any one of the preceding claims, **characterised in that** the retaining bars (3) are slidable on the apical shaft (4) in the axial direction thereof and are lockable in the required positions.

4. A bow according to any one of the preceding claims, **characterised in that** the apical shaft (4) has a length such that its ends are situated beneath the carrier elements (8) and **in that** in the case of purely static loading of the bow (1) applied to the overhead line the carrier elements (8) are spaced from the apical shaft (4).

5. A bow according to claim 4, **characterised in that** stops are provided on the carrier elements (8) and/or at the ends of the apical shaft (4) to limit the relative movements in relation to one another.

6. A bow according to claim 4 or 5, **characterised in that** the underside of the carrier elements (8) and/or the ends of the apical shaft (4) and/or the stops are covered with impact-damping material (11).

## Revendications

1. Archet (1) pour pantographe de véhicules à propulsion électrique avec alimentation par caténaire, l'archet (1) étant réalisé sous la forme d'un archet à cadre avec deux frotteurs (6, 7) agencés parallèlement l'un à l'autre et transversalement à l'axe longitudinal du véhicule, reliés entre eux par deux éléments supports (8) parallèles entre eux dans le sens longitudinal du véhicule, et de sorte que l'archet (1) présente un arbre d'archet (4) pour la liaison avec un bras supérieur ou des ciseaux supérieurs du pantographe et des éléments de liaison élastiques sont prévus entre l'arbre d'archet (4) et les éléments porteurs (8)
**caractérisé**
- **en ce que** les éléments de liaison élastiques sont formés par deux étriers élastiques (2) à base d'un matériau en forme de barre et conformés en U,
- **en ce que** les branches du U de chaque étrier élastique (2) sont agencées transversalement à la direction longitudinale du véhicule et le coude du U de chaque étrier élastique (2) est dirigé dans la direction longitudinale du véhicule,
- **en ce que** les étriers élastiques (2) sont reliés chacun par leurs extrémités libres des branches du U avec une poutre de maintien (3) disposée de façon fixe sur l'arbre d'archet (4) et chacun dans la zone de leur coude du U avec l'un des éléments supports (8),
- **en ce que** la liaison entre les extrémités libres des branches du U de l'étrier élastique (2) et la poutre de maintien (3) est respectivement un assemblage par serrage amovible et réglable dans la direction longitudinale de la branche du U et
- **en ce que** l'assemblage entre la zone du coude du U de l'étrier élastique (2) et l'élément support (8) est respectivement un assemblage à emboîtement sans serrage.

2. Archet selon la revendication 1, **caractérisé en ce que** deux alésages sont ménagés dans chaque élément support (8) avec l'espacement entre les branches du U de l'étrier élastique (2) et **en ce que** l'étrier élastique (2) est emboîté par ses branches du U, jusqu'à la venue en butée du coude du U à l'extérieur sur l'élément support (8), à travers celui-ci.

3. Archet selon l'une quelconque des revendications précédentes, **caractérisé en ce que** les poutres de maintien (3) peuvent coulisser en direction axiale de l'arbre d'archet (4) sur celui-ci et peuvent être verrouillées dans des positions souhaitées.

4. Archet selon l'une quelconque des revendications précédentes, **caractérisé en ce que** l'arbre d'archet (4) présente une longueur telle que ses extrémités sont disposées au-dessous des éléments supports (8) et **en ce que**, avec une charge purement statique de l'archet (1) posé contre le caténaire, les éléments supports (8) présentent un espacement par rapport à l'arbre d'archet (4).

5. Archet selon la revendication 4, **caractérisé en ce qu'**il est prévu, sur les éléments supports (8) et/ou sur les extrémités de l'arbre d'archet (4), des butées pour la limitation des déplacements relatifs des uns par rapport aux autres.

6. Archet selon la revendication 4 ou 5, **caractérisé en ce que** le côté inférieur des éléments supports (8) et/ou les extrémités de l'arbre d'archet (4) et/ou les butées sont revêtus d'un matériau (11 ) absorbant les chocs.
